# EUROPEAN PATENT SPECIFICATION

(11) **EP 0 312 993 B1**
(45) Date of publication and mention of the grant of the patent: **15.09.1993**
(21) Application number: 88117345.4
(22) Date of filing: 18.10.1988
(51) Int. Cl.: B29B 15/12, B29C 67/14

(54) **Method for impregnation of resin**
Verfahren zum Imprägnieren mit einem Harz
Procédé d'imprégnation avec une résine

(30) Priority: 20.10.1987 JP 265059/87
(43) Date of publication of application: 26.04.1989
(73) Proprietor: MITSUBISHI RAYON CO., LTD., Tokyo (JP)
(72) Inventor: Hattori, Toshihiro, Higashi-ku Nagoya (JP); Gotoh, Hajime, Higashi-ku Nagoya (JP); Takiguchi, Ikuo, Toyohashi-shi (JP)
(74) Representative: Hansen, Bernd, Dr. Dipl.-Chem.

(56) References cited:
- EP-A- 0 022 919
- EP-A- 0 106 148
- BE-A- 450 087
- DE-B- 1 471 256
- FR-A- 2 512 731
- NL-A- 6 612 990
- US-A- 2 795 521
- US-A- 3 051 608
- JAPANESE PATENT GAZETTE, section CH, week 8308, class A, no. 83-05452K (03), Derwent Publications Ltd, London, GB; & JP-A-57 195 619 (YOKOHAMA RUBBER CO.) 01-12-1982
- JAPANESE PATENT GAZETTE, section CH, week B635, class A, no. 86-229553 (35), Derwent Publications Ltd, London, GB; & JP-A61 160 230 (MATSUSHITA ELEC. WORKS) 19-07-1986

## Description

The present invention relates to production of fiber-reinforced plastics and more particularly it relates to a novel method of resin impregnation in production of a plate-like material comprising a sheet-like reinforcing fiber and a resin as a matrix.

As one form of fiber-reinforced plastic (hereinafter referred to as "FRP") or of an intermediate material for obtaining FRP, there has been a structure comprising a sheet-like reinforcing fiber impregnated with resin.

The intermediate material is generally known as a prepreg and the present invention mainly relates to a method of resin impregnation in production of the prepreg.

Impregnation of resin in this field is to impregnate fiber layer with a resin fluidized by solvent or by heating irrespective of the resin being a thermosetting resin or a thermoplastic resin and the representative resin impregnation method which is most popular at present is the hot-melt method which performs fluidization of resin by heating.

NL-A-6612990 discloses a process for impregnating mats of glass silk with a resin layer by using press rolls. Said rolls may have a roughened surface in order to avoid that the difference in rate between the mat and the covering film occurs with the transport, whereby the covering film is indented into the glass silk mat without damaging the film.

Specifically, as shown in the accompanying Fig. 8, a sheet-like material (26) of reinforcing fiber is laminated on a resin film (25) comprising a release paper (24) uniformly coated with resin and the resin is impregnated in the sheet-like material by heating roll (27) and press roll (28) to obtain a prepreg (29) impregnated with resin. Apparatus for production of prepregs by such impregnation method have been reported, for example, by California Graphite Machines, Inc. (Oranze, CA) and Caratseh AG (Switzerland).

These impregnation methods are called press roll method and the basic problem of this method is that squeeze-out of resin by press roll occurs when delivery speed of the sheet-like material (26) is increased for improvement of productivity. That is, the phenomenon occurs that the resin fluidized by heating roll (27) in Fig. 8 is rather squeezed out before the rolls (on the left side of the nipping point of rolls (27) and (28) in Fig. 8) by pressing by press roll (28) than impregnated into the fiber layer of the sheet-like material (26).

This phenomenon occurs more conspiciously when the diameter of fibers constituting the sheet-like material (26) to be impregnated with resin is smaller; the direction of fibers coincides with the delivery direction of the sheet-like material; the thickness of the fiber layer is larger; or the viscosity of the resin is higher.

Therefore, when the conventional roll impregnation method is employed, the viscosity of resin is decreased as low as possible and the resin is gradually impregnated into the fiber layer by the press roll. Thus, the production rate of prepreg is determined by the impregnation rate of resin into the fiber layer of the sheet-like material, and that is a problem of a conventional roll impregnation method.

Furthermore, for the conventional roll impregnation method, it is necessary to keep the state of low viscosity for a long time, and especially in the production of a prepreg using a thermosetting resin as a matrix, care should be given to the progress of the curing reaction and this was one factor limiting the resin composition.

### SUMMARY OF THE INVENTION

The object of the present invention is to provide a roll impregnation method which solves the basic problems in the conventional roll impregnation method, namely, the low impregnation rate of resin into fiber layer and the squeeze-out of resin which occurs when the production rate is increased and other various problems caused by heating of a long time.

### BRIEF DESCRIPTION OF THE DRAWINGS

Fig. 1 diagrammatically shows the resin impregnation method which uses a press roll having a specific rugged pattern according to the present invention.

Figs. 2-4 are plan views and sectional views of the specific patterns used in the present invention.

Fig. 5 diagrammatically shows the impregnation process by a rugged press roll according to the present invention.

Fig. 6 is a graph which shows the relation between the area of convex portions and the content of resin in the prepreg for a favorable impregnation.

Fig. 7 is a flow sheet of the impregnation method by electrical heating.

Fig. 8 shows the conventional roll pressing impregnation method.

### DESCRIPTION OF THE INVENTION

The gist of the present invention for attaining the above object is a method for resin impregnation by a roll which comprises overlaying a sheet-like material (2) on a resin layer (1) and then impregnating the resin in the sheet-like material, characterized in that a press roll (5) having a specific rugged pattern including convex portions enclosed by a straight line, a curved line or both of them is used.

Further details of the invention are defined in the features of the dependent claims.

The present invention is explained referring to the drawings.

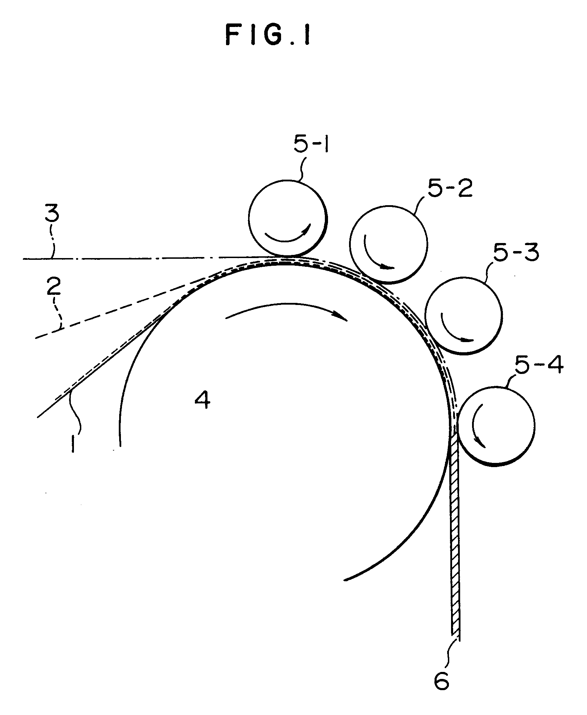

Fig. 1 explains the method of resin impregnation, characterized by using a press roll having a specific rugged pattern according to the present invention.

A laminate which comprises a resin film (1) comprising a resin coated release paper, a sheet-like material (2) of reinforcing fiber overlaid on said resin film (1) and a release film (3) further overlaid on said sheet-like material (2) is heated on the surface of a heating drum (4) and at the point when the resin is fluidized, the resin is impregnated into the fiber layer of the sheet-like material (2) by press roll (5-1). In the conventional methods, press roll (5-1) is a so-called flat press roll having a flat surface while in the present invention, it is a so-called rugged press roll having a specific rugged pattern on the surface. This is characteristic of the present invention.

The rugged press roll can be combination of two or more of (5-1), (5-2), (5-3), ..... and furthermore, may be used in combination with flat press rolls.

The rugged press roll use of which is a basic requirement for the present invention will be explained below.

First, the specific rugged pattern on the surface of the rugged press roll used in the present invention will be explained.

From the viewpoint that improvement of productivity depends on improvement of impregnation rate of resin in the direction of thickness of fiber layer, the inventors have made research on rugged pattern which can guide the resin in the direction of thickness of fiber layer without causing squeeze-out of the resin.

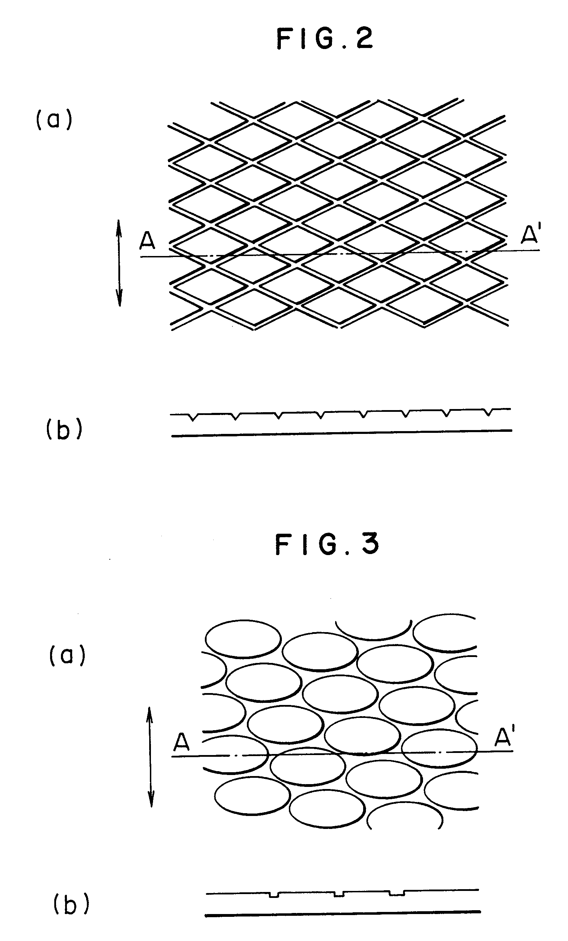

As a result, it has been concluded that this is a pattern having convex portions enclosed by straight line, curve or both of them. Such rugged patterns are shown in Figs. 2-4.

Fig. 2 shows a plan view (a) of a typical example of a rugged pattern having convex portions enclosed with straight line and a sectional view (b) of this rugged pattern cut along A-A'. The arrow coincides with the peripheral direction of rugged press roll. This pattern has rhombic convex portions enclosed with straight lines.

Fig. 3 is a plan view of a rugged pattern having elliptical convex portions enclosed with a curved line.

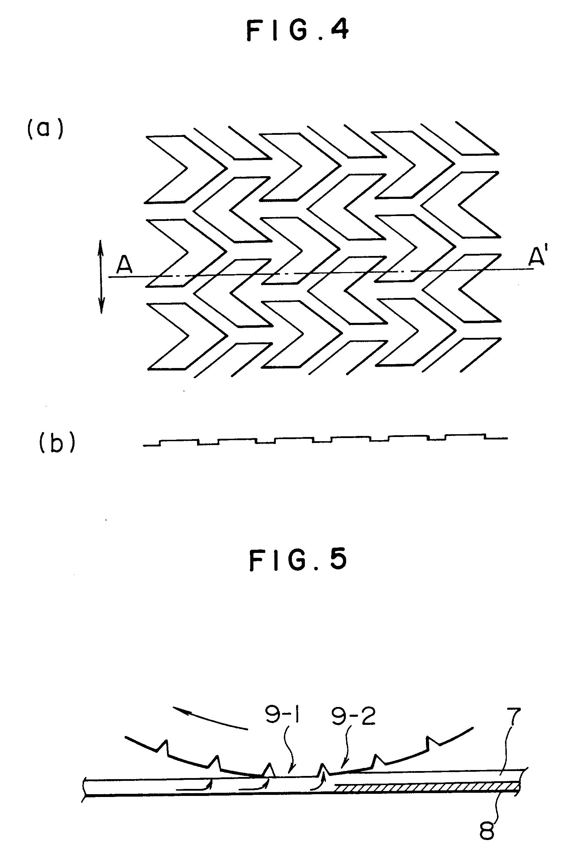

Fig. 4 is a plan view of another example of a rugged pattern having convex portions enclosed with straight lines. In this pattern, the convex portions have a bent shape. The arrow coincides with peripheral direction of the rugged press roll.

Japanese Patent Kokai No. 57-195619 (S. Kawaguchi) proposes a method for the production of a prepreg which comprises impregnating a resin in a random mat-like material by a fluted roll having continuous grooves in peripheral direction wherein bubbles are removed at the time of impregnation. However, this method is markedly different from the method of the present invention in that the convex portions of rugged press roll used in the present invention are discontinuous as shown in Figs. 2-4. This is the reason why according to the Kawaguchi method, bubbles can be removed, namely, squeezed out, but the effect to impregnate resin into the fiber layer cannot be expected. That is, in Fig. 5 a part of resin (8) placed underneath sheet-like material (7) is impregnated into the fiber layer constituting the sheet-like material due to pressing by convex portion 9-1 of the rugged press roll and surplus resin is squeezed out forwardly (on the right side in Fig. 5). However, when the convex portions are discontinuous as in the present invention, the flow of resin can be stopped by concave portion 9-2 and besides the direction of the flow of resin can be converted to the direction of convex portion free from pressure, namely, direction of thickness of fiber layer by suitably setting volume of the concave portion. That is, the pressure generated by the surplus resin at the convex portions can be converted to pressure for impregnating the resin in the direction of thickness of fiber layer.

Therefore, the size of the rugged pattern should be determined by the diameter of the rugged press roll, the material of the roll, the compression characteristics of sheet-like material and the like. One example is that when the diameter of the press roll is 100 mm or more and the material of the roll is rubber, the maximum length of the convex portion in the peripheral direction of roll is preferably less than 8-10 mm.

The rugged pattern explained above has relatively finely divided convex portions. On the other hand, in case of such patterns as having convex portions in the form of straight lines or curved lines arranged in parallel, for example, the rugged press roll having grooves along the rotating axis of the press roll, theoretically change in flow direction of resin as shown in Fig. 5 occurs, but especially when the sheet-like material is a tow sheet arranged in one direction, the orientation of fibers is disordered due to change of the flow direction of resin and the flow path of air replaced by resin is closed. For these reasons, the patterns are not preferred for rugged press roll used for impregnation.

However, as explained hereafter, it should not be excluded to use rugged press roll having continuous concave portions mainly in the peripheral direction of press roll (for example, fluted roll having grooves of constant pitch in peripheral direction) after impregnation of resin into a fiber layer using the pattern of the present invention as shown in Figs. 2-4.

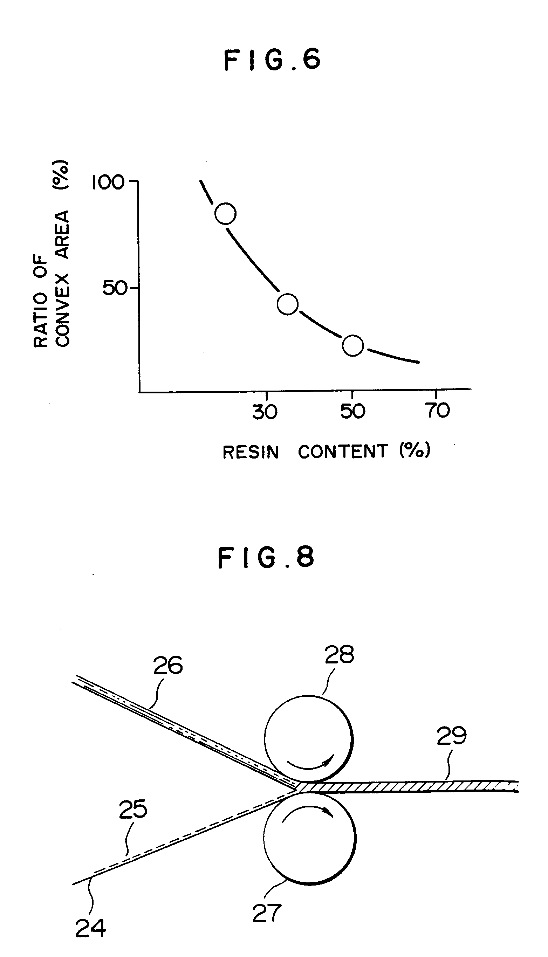

The proportion of the area of convex portions in the total peripheral area (hereinafter referred to as "ratio of convex area") is determined by the thickness of the sheet-like material which is to be impregnated with resin, the proportion of volume of resin in the volume of the impregnated sheet-like material (hereinafter referred to as "resin content %"), viscosity of resin and the like, but the most important factor is the resin content. As one example, the resin content and the optimum ratio of the convex area were obtained by experiments when the sheet-like material is made by arranging carbon fiber tows and has a basis weight of 150 g/m² and the resin is an epoxy resin of 10 ps (100°C). As shown in Fig. 6, it is necessary to decrease the ratio of the convex area with increase in resin content.

When ratio of the convex area is too high, squeezing-out of resin occurs and when it is too low, pressure to accelerate flowing of resin in the direction of the thickness of the sheet-like material is not generated and thus the effect of the rugged press roll of the present invention as explained above cannot be expected. The resin content in the preparation of FRP is about 20-70% and the preferred ratio of the convex area in this field is 20-90%, more preferably 30-80%.

With reference to the depth of the concave portion, the concave portion must have such volume to catch the resin flown by the convex portion through the sheet-like material in the direction of thickness and thus, one example of the depth is at least 0.6 time the width of the concave portion in the case of the cross section of the concave portion being a triangle as shown in (b) of Fig. 2.

Rugged press rolls of the present invention explained above are those having the specific pattern directly on the surface of the rolls, but it is also possible to use a pattern belt having the pattern of the present invention. In this case, the change of the flow direction of resin can be performed more surely.

According to the results of the experiments, the optimum pressing pressure of the rugged press roll changes depending on the material of the roll, resin viscocity, thickness of fiber layer and resin content, but suitably about 0.5-80 kg/cm, preferably 5-40 kg/cm as linear pressure.

Resin impregnation action of the rugged press roll of the present invention has been explained hereabove. Next, explanation will be given on how to use the rugged press roll.

In Fig. 1, if the press roll is only one rugged press roll of the present invention (namely, press rolls 5-2, 5-3, and 5-4 are not present), the impregnation of resin into the fiber layer is localized to result in a prepreg where the resin is not impregnated into all portions of sheet-like material. In such a impregnation state, flow paths through which air can pass are present in longitudinal direction and width direction of sheet-like material and such is preferred as a structure of a prepreg which requires no debulking. In general, especially when a laminate is made using thermosetting prepregs, every layer or several layers must be subjected to debulking in order to remove air present between the layers by vacuum packing. However, when the prepregs to be laminated contain communicating paths for air, there is the possibility to omit the debulking. This is reported in "Advanced Materials Technology" '86 edited by Society for the Advancement of Material and Press Eng. pages 480-490.

A plurality of rugged rolls are used as shown in Fig. 1 or they are used in combination with conventional press rolls including flat press rolls for impregnation.

One typical example is such that the press roll (5-1) is the rugged press roll of the present invention, press roll (5-2) is a fluted roll having grooves continuous in the peripheral direction and press roll (5-3) is a flat roll with omission of press roll (5-4) in Fig. 1. According to such combination, the resin is locally impregnated into the sheet-like material by the rugged press roll (5-1) and then the resin is transferred in the longitudinal direction of the sheet-like material and at the same time air in the fiber is replaced by the resin by the fluted roll (5-2), whereby the whole sheet-like material is wetted with the resin. In this case, since the resin is firstly transferred into the fiber layer of the sheet-like material, even if the second press roll is a fluted roll, the phenomenon of squeezing-out of resin seen in the conventional roll impregnation method does not occur even when the delivery speed of sheet is high and thus high speed resin impregnation becomes possible. In this way, the rugged press roll may be used alone or in combination with other press rolls, but it is necessary to use the rugged press roll as a first roll if press rolls are used for the purpose of impregnation.

This is for firstly transferring resin in the direction of the thickness of the fiber layer before the resin is squeezed out along the longitudinal direction of the sheet-like material and then transferring the resin through the fiber layer along the longitudinal direction of the sheet-like material. Therefore, the present invention does not exclude the presence of a press roll which takes substantially no part in impregnation of resin before the rugged press roll of the present invention. Furthermore, the rugged press rolls may be used in combination of two or more.

Next, matrix resins used for the impregnation in the present invention will be explained. Since the gist of the present invention is to impregnate resins having fludity into a fiber layer, resins to be impregnated have no special limitation and there may be used any resins which show fluidity upon heating, for example, thermosetting resins such as unsaturated polyester resins, epoxy resins, phenolic resins, urea resins, melamine resins, diallyl phthalate resins and silicone resins and thermoplastic resins such as nylon, polysulfones, polyether imides, polyether ether ketones, polyvinyl chloride, polybutylene terephthalate, polyethylene terephthalate and polyethylene.

Sheet-like materials used for the impregnation with the resin will be explained.

A sheet-like material most frequently used is a so-called unidirectional sheet which is made by arranging tows in parallel and the feature of the impregnation method of the present invention is especially highly exhibited in the impregnation of this unidirectional sheet.

That is, in case of the impregnation of a unidirectional sheet-like material, the flow speed of resin in the direction of the thickness of the fiber layer and that in the longitudinal direction of the fiber (longitudinal direction of the sheet) are most different from each other and squeezing-out of resin does most easily occur and besides the orientation of fibers are most readily disordered according to conventional methods. However, according to the present invention, both the problems of squeezing-out and disorder of the orientation of fibers can be solved simultaneously.

Furthermore, according to the impregnation method of the present invention, the impregnation is carried out with locally restraining the sheet-like material as mentioned above, and hence it can also be applied to woven fabrics or nonwoven fabrics which are aggregates of unoriented fibers.

These sheet-like materials include those made of, for example, carbon fibers, glass fibers, aromatic polyamide fibers, polyester fibers and polyethylene fibers and are not critical. However, sheet-like materials comprising carbon fiber tows which are small in single fiber diameter and which are highly elastic are effective for the resin impregnation method of the present invention because the difference between the flow speed of the resin in the direction of the thickness of the sheet-like material and that in the direction of the orientation of the fibers is especially great. Moreover, when fibers which constitute the sheet-like material are carbon fibers or materials containing carbon fibers, the impregnation effect of the present invention can further be improved by utilizing heat generated by application of electric current.

According to the conventional technique, namely, the method in which resin placed under sheet-like material is fluidized by heating from below, there exists a temperature gradation in the fiber layer. That is, decrease of the resin temperature due to absorption of heat by fibers in the fiber layer, namely, increase of the resin viscosity occurs, and thus, there is a problem especially in the impregnation of a sheet-like material comprising a thick fiber layer.

On the other hand, in the case of a resin impregnation method carried out by heating by application of electric current which causes direct generation of heat from fibers per se, the whole fiber layer can be set at a given temperature and so no temperature gradation is seen in a fiber layer and thus there occurs no increase in the viscosity of resin upon impregnation.

Therefore, rapid impregnation of resin is also possible for a sheet-like material comprising a thick fiber layer by combination of the impregnation method of the present invention which uses rugged press roll with the method of heating a fiber layer by application of electric current.

Besides, since the fiber is directly heated, heat loss is small and rapid heating is possible and thus this is a preferred heating method as an auxiliary means for rapid impregnation.

At present, sheet-like materials which generate heat upon application of electric current include carbon fibers. According to experimental results, sheet-like materials wherein at least 30% by weight, preferably at least 60% by weight of fibers present in the direction of flow of current applied are carbon fibers being preferred because of the easy control of temperature of the sheet-like materials.

When sheet-like material comprises carbon fibers, carbon fibers can be heated to room temperature to 500°C by application of a direct current or an alternating current and the temperature is suitably adjusted depending on the production rate or the resin conditions to control the impregnation state of resin. It is utterly possible to reduce the viscosity of the resin by heating the resin by a conventional method simultaneously with heating carbon fibers by application of electric current in the impregnation of resin.

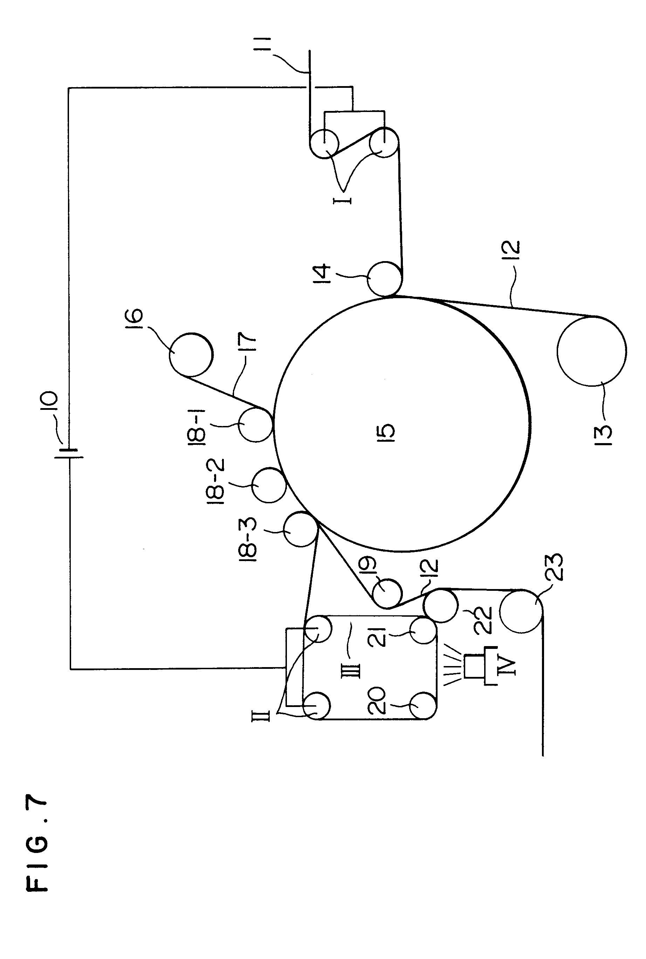

Such resin impregnation method which employs heating by application of an electric current in combination is diagrammatically shown in Fig. 7.

In Fig. 7, sheet-like carbon fiber (11) supplied is applied with electric current between roll electrode (I) and film electrode (III) by electric source (10) and is thus heated. Then, this is superposed on resin film (12) of the resin-coated release paper supplied from roll (13) and the laminate is guided onto the tension generating roll (15) through free roll (14). Thereafter, the laminate is covered with a top film (17) supplied from roll (16) and then is subjected to the impregnation of resin by pressing by the rugged press rolls (18-1 ∼ 18-3) according to the present invention. Then, the release paper is once peeled off and the surface of carbon fiber layer is brought into contact with film electrode (III). In this case, the surface of carbon fiber layer generates heat at the initial stage of contact with the film electrode and is in the state of high temperature, but moves together with the surface of film electrode (electrical contact being concentrated in the initial stage of contact) and is sufficiently cooled at the position of roll (21) by a cold air generator (IV). After being separated from the film electrode, the sheet-like carbon fiber is again superposed on the release paper to obtain a prepreg comprising a resin-impregnated sheet-like material provided on a release paper. Rolls (19)-(23) are free rolls.

The form of electrode is not critical and may be a roll electrode, a film electrode and the like, but the electrode with which the sheet-like material is contacted after the impregnation is preferably a film electrode.

Effective application of electric current is possible by increasing the contact length between the impregnated sheet-like material (e.g., prepreg) and electrode by using a film electrode and it is also possible to sufficiently cool the prepreg at the position where the prepreg is separated from the electrode. For this purpose, the contact length between the electrode and the sheet-like material is preferably at least 300 mm. However, this length depends on the construction of the film electrode and has no special limitation.

A method of carrying out the resin impregnation with heating carbon fibers by application of electric current is disclosed in Japanese Patent Kokai No. 49-81472, but this does not refer to preferred form of electrode, and besides it contains no suggestion from which the heating effect in the resin impregnation of the sheet-like material with a thick fiber layer can be expected.

The present invention will be explaied in more detail by the following examples. In the examples, measurement of properties of the resulting molded plates was carried out by the following methods.
- Flexural strength and fluxrual modulus:: ASTM-D790-84A
- ILSS :: ASTM-D2334-84
- Vf :: Archimedes' method

### Example 1

(1) In the impregnating device as shown in Fig. 1, a resin film of 50 cm in width comprising a release paper coated with 106 g/m² of resin as resin film (1), a unidirectional sheet (240 g/m²) comprising 150 carbon fiber tows arranged in parallel in a width of 50 cm (each of said carbon tows comprising a bundle of 12,000 filaments of carbon fiber of 8 µ in diameter) as a sheet-like material (2) and a polypropylene film of 20 µ in thickness as release film (3) were laminated and fed onto heating roll (4) heated at 130°C in surface temperature.
   Press rolls used in this example were as follows.
   Press roll 5-1: Silicone rubber roll of 80 degree in rubber hardness and 125 mm in outer diameter having rugged pattern as shown in Fig. 2 wherein the rhombic convex portion has a shorter diagonal of 3 mm and a longer diagonal of 6 mm and width of groove of concave portion is 0.9 mm and a depth of 0.8 mm (ratio of convex area: about 45%).
   Press roll 5-2: A metallic fluted roll of 125 mm in outer diameter having grooves of 0.7 mm in depth at a pitch of 1 mm in peripheral direction.
   Press roll 5-3: A flat roll of 125 mm in outer diameter.
   Resin impregnation was carried out using these press rolls at a pressing pressure of 30 kg/cm and a delivery speed of carbon fiber sheet (referred to as "impregnation rate" hereinafter) of 15 m/min. No unimpregnated portions were present and no disorder of orientation of fibers occurred. Thus, a carbon fiber unidirectional prepreg of high quality was obtained.
(2) Comparative Example
   Impregnation was carried out under the same conditions as in the above (1) except that flat rolls were employed as all of press rolls (5-1, 5-2 and 5-3). A prepreg fit for use was not obtained because of the disorder in orientation of fibers due to squeeze-out and flowing of resin and presence of unimpregnated portions and it was necessary for obtaining a usable prepreg to reduce the pressure of press rolls (5-1, 5-2 and 5-3) to about 0.5 kg/cm and the impregnation rate to 0.2 m/min. Thus, a resin impregnation of high speed was impossible.

### Example 2

A plain cloth of 200 g/m² was prepared by using untwisted yarns of 3K obtained by bundling carbon fibers of 8 µ in diameter was warps and wefts. This cloth was superposed on an epoxy resin film of 200 g/m² in basis weight and was subjected to pattern press impregnation in the same manner as in Example 1 except that area of concave portions on the rugged press roll was greater than that in Example 1, namely, the ratio of the convex area was 32%.

That is, the impregnation was carried out in the following manner.

The superposed carbon fiber cloth of 200 g/m² and the resin film of 200 g/m² was led onto a rotating drum heated at 130°C and the impregnation was effected first by a first rugged roll (5-1) (pattern roll of 125 mm in diameter) at the position where the resin temperature was raised to 110°C, then by a fluted roll having grooves at a pitch of 1 mm provided immediately after the first rugged roll and finally by a flat roll.

The impregnation rate was 10 m/min and the resulting carbon fiber prepreg was completely impregnated with resin.

Conventionally, impregnation of the cloth of this kind has been effected by flat press roll or low pressure roll for preventing squeezing-out of resin and in this case the resin impregnation rate is about 0.3 m/min. That is, as shown in this Example 1, the impregnation rate can be markedly increased by employing the method of the present invention.

### Example 3

Roll impregnation was carried out in the same manner as in Example 1 except that only one press roll (5-1) (rhombic pattern) was used as press roll. There remained regularly unimpregnated portions in the whole of the resulting prepregs and so these prepregs were laminated without debulking (non-debulking method) and properties of the resulting laminate were measured to obtain the following results, which show that the laminate was not different in properties from that obtained by laminating the prepregs obtained by conventional method with carrying out debulking.

Conditions for molding the laminate used for evaluation of properties were as follows: Laminate of the prepregs was subjected to an autoclave molding which comprised preheating at 90°C under 1 kg/cm² in vacuum for 30 minutes and heating at 130°C under 5 kg/cm² for 60 minutes.

| | Laminate of prepregs obtained by the present invention (Non-debulking) | Laminate of prepregs obtained by conventional method (Conventional debulking) |
|---|---|---|
| Flexural strength | 181 kg/mm² | 180 kg/mm² |
| Flexural modulus | 13.0 T/mm² | 13.2 T/mm² |
| ILSS | 9.8 kg/mm² | 9.7 kg/mm² |
| Vf | 58% | 57% |

### Example 4

A sheet-like material was prepared by arranging 150 carbon fiber tows of 12 K (each comprising 12,000 carbon fiber filaments) in parallel in a width of 50 cm. This sheet was applied with voltage by passing on roll electrode and then was fed onto a resin film comprising a release paper coated with resin at 106 g/m² in a width of 50 cm. Then, the resin was impregnated in the fiber sheet by applying a pressing pressure of 30 kg/cm by rugged press roll. In this case, the pattern on the rugged press roll was the same as in Example 1. Immediately after this rugged press roll, the sheet was again allowed to contact with electrode as shown in Fig. 7. The tension generating roll was heated to 90°C.

Distance between electrodes was 2.5 m, between which the carbon fiber sheet and the resin film contacted with each other in a length of 1.5 m and in this case the voltage was 50 V, the current was 140 A and the temperature of carbon fiber was 120°C.

The impregnation rate (delivery speed of the sheet-like material) was 10 m/min.

Setting of the electrodes is roughly shown in Fig. 7. The state of impregnation into fiber layer and the properties of a molded laminate obtained under the same conditions as in Example 3 are as follows:

| | |
|---|---|
| State of impregnation | Good with no unimpregnated portion |
| Flexural strength | 180 kg/mm² |
| Flexural modulus | 13.0 T/mm² |
| ILSS | 11.5 kg/mm² |
| Vf | 60% |

### Example 5

(1) A sheet-like material was prepared by arranging 300 carbon fiber tows (comprising 12,000 carbon fibers) of 12 K in a width of 50 cm and this was led onto a release paper coated with resin at 200 g/m² in a width of 50 cm. The carbon fiber tow sheet was applied with voltage by passing on a roll electrode before contacting with the resin coated paper and then superposed on the resin coated paper and the resin was impregnated by the same rugged press rolls as in Example 1. Immediately thereafter, the sheet was again allowed to contact with an electrode. The pressing pressure was 30 kg/cm and the feeding speed was 5 m/min.
The distance between electrodes, the voltage and the current were 2 m, 50 V and 260 A, respectively and the temperature of carbon fiber was 120°C. The tension generating roll was heated at 120°C.
The state of impregnation of resin in the fiber layer and the properties of laminate obtained by molding under the same conditions as in Example 3 are shown below.

| | |
|---|---|
| State of impregnation | Good with no unimpregnated portion |
| Flexural strength | 182 kg/mm² |
| Flexural modulus | 12.0 T/mm² |
| ILSS | 11.6 kg/mm² |
| Vf | 60% |

(2) Comparative Example
Impregnation was carried out under the same conditions as in the above Example 5 except that application of voltage to the carbon fiber was not effected and tension generating roll was heated at 130°C. The results are as follows:
- State of impregnation:: Not good with unimpregnated portion of about 40% of the total surface area
- Properties :: Properties were not measured because of the insufficient impregnation

According to the present invention, squeezing-out of resin at impregnation can be prevented and high speed production of prepregs becomes possible by employing rugged press rolls and furthermore, production of non-debulk prepreg sheet becomes possible. Besides, in case of carbon fibers, thick prepreg sheet thereof can be produced by using the method of heating by application of electric current in combination. Production of such a prepreg sheet has been impossible according to conventional methods.

## Claims

1. A method for impregnation of resin which comprises superposing a sheet-like material (2) on a resin layer (1) and then impregnating the resin into the sheet-like material, characterized by that a press roll (5) is used which has a specific rugged pattern, including convex portions enclosed by a straight line, a curved line or both of them.

2. A method according to claim 1 wherein the area of the convex portions is 20-90 % of the surface area of the press roll.

3. A method according to claim 1 wherein one or more rugged press rolls are used alone or in combination with a conventional press roll.

4. A method according to claim 1 wherein the sheet-like material comprises tows arranged in parallel.

5. A method according to claim 1 wherein the sheet-like material is a woven fabric.

6. A method according to claim 1 wherein the sheet-like material comprises carbon fibers.

7. A method according to claim 6 wherein the sheet-like material comprising carbon fibers is applied with electric current to generate heat, thereby to accelerate the fluidization of resin and the elevation of temperature of the sheet-like material.

## Patentansprüche

1. Verfahren zur Imprägnierung von Harz, bestehend aus der Übereinanderanordnung eines plattenartigen Materials (2) auf einer Harzschicht (1) und anschließendem Imprägnieren des Harzes in das plattenartige Material, dadurch gekennzeichnet, daß eine Druckwalze (5) verwendet wird, die ein speziell gefurchtes Muster hat, das konvexe Abschnitte einschließt, die durch eine gerade Linie, eine gekrümmte Linie oder beide umschlossen werden.

2. Verfahren nach Anspruch 1, worin die Flache der konvexen Abschnitte 20 bis 90 % der Oberfläche der Druckwalze beträgt.

3. Verfahren nach Anspruch 1, worin eine oder mehrere Frurchendruckwalzen allein oder in Kombination mit einer üblichen Druckwalze verwendet werden.

4. Verfahren nach Anspruch 1, worin das plattenartige Material parallel angeordnete Faserbänder umfaßt.

5. Verfahren nach Anspruch 1, worin das plattenartige Material ein gewebter Stoff ist.

6. Verfahren nach Anspruch 1, worin das plattenartige Material Kohlenstoffasern umfaßt.

7. Verfahren nach Anspruch 6, worin das Kohlenstoffasernumfassende plattenartige Material mit elektrischem Strom beaufschlagt wird, um Wärme zu erzeugen, um dadurch die Verflüssigung des Harzes und die Erhöhung der Temperatur des plattenartigen Materials zu beschleunigen.

## Revendications

1. Procédé d'imprégnation par de la résine, qui comprend la superposition d'une matière en forme de feuille (2) sur une couche de résine (1) puis l'imprégnation de la résine dans la matière en forme de feuille, caractérisé en ce qu'on utilise un rouleau presseur (5) qui présente une sculpture spécifique, incluant des parties convexes délimitées par un bord droit, un bord rond, ou les deux.

2. Procédé selon la revendication 1 dans lequel la surface des parties convexes représente 20 à 90% de l'aire superficielle du rouleau de compression.

3. Procédé selon la revendication 1 dans lequel on utilise un ou plusieurs rouleau(x) presseurs sculptés, seul(s) ou en combinaison avec un rouleau presseur conventionnel.

4. Procédé selon la revendication 1 dans lequel la matière en forme de feuille comprend des câbles disposés en parallèle.

5. Procédé selon la revendication 1 dans lequel la matière en forme de feuille est une étoffe tissée.

6. Procédé selon la revendication 1 dans lequel la matière en forme de feuille contient des fibres de carbone.

7. Procédé selon la revendication 6 dans lequel on fait passer du courant électrique dans la matière en forme de feuille contenant des fibres de carbone pour produire de la chaleur, ce qui accélère la fluidisation de la résine et l'élévation de température de la matière en forme de feuille.
